# EUROPÄISCHE PATENTSCHRIFT

(11) **EP 4 425 296 B1**
(45) Veröffentlichungstag und Bekanntmachung des Hinweises auf die Patenterteilung: **25.02.2026**
(21) Anmeldenummer: 23159920.0
(22) Anmeldetag: 03.03.2023
(51) Int. Cl.: G05D 16/06

(54) **DRUCKMEMBRANEINHEIT**
PRESSURE DIAPHRAGM UNIT
UNITÉ DE MEMBRANE DE PRESSION

(43) Veröffentlichungstag der Anmeldung: 04.09.2024
(73) Patentinhaber: FASS-FRISCH GmbH, 75031 Eppingen (DE)
(72) Erfinder: Grittmann, Dennis, 75031 Eppingen (DE); Diefenbacher, Michael, 75031 Eppingen (DE); Krüger, Gerd, 75031 Eppingen (DE)
(74) Vertreter: mepat Patentanwälte

(56) Entgegenhaltungen:
- DE-C- 763 658
- US-A1- 2012 111 425
- US-A1- 2019 155 316

## Beschreibung

Die Erfindung betrifft eine Druckmembraneinheit zur Druckregelung, Druckminderung und Druckbegrenzung.

Aus dem Stand der Technik ist es bekannt, Druckregelvorrichtungen mit unter Druck stehenden Gasflaschen einzusetzen, um beim Auslass des Gases aus der Druckflasche dessen Druck zu regulieren und auf einen vorbestimmten Solldruck zu mindern.

Ein Beispiel dafür sind Druckregelvorrichtungen, die in einem Flüssigkeitsbehälter angeordnet werden, um den Druck im Behälterinnenraum bei der Entnahme von Flüssigkeit aufrecht zu erhalten. Zum Zapfen von Getränken wird dafür zumeist Kohlenstoffdioxid (CO₂) aus einer Kapsel (oder Kartusche oder Patrone) verwendet, die mittels einer Druckregelvorrichtung in dem Getränkebehälter angeordnet wird.

Die WO 2006/082211 A1 beschreibt eine solche zur Anordnung in einem Getränkebehälter vorgesehene Druckregelvorrichtung, die eine Gasdruckkapsel, ein Kapselgehäuse und eine Druckmembraneinheit zur Druckregulierung aufweist. Die Druckmembraneinheit weist eine Druckmembran und ein Gehäuse mit einem Druckraum und einem Druckregulierraum auf, die über eine Passage verbunden sind. Der Druckregulierraum wird auf einer Seite von der Membran begrenzt, die von einem zweiteiligen Membranhalter gehalten wird, über den die Membran mittels einer Feder gegen den Druckregulierraum vorgespannt wird. Der Membranhalter kontaktiert einen Reglerteller, über den der Druck der Membraneinheit auf einen die Passage abdichtenden Ventilkopf übertragen wird. Um zu verhindern, dass der Druck im Druckregulierraum einen vorbestimmten Wert übersteigt, weist die Druckregelvorrichtung ein Sicherheitssystem auf, das eine axiale Bohrung im Membranhalter umfasst, die über geringdimensionierte Querbohrungen zwischen Membranhalter und Reglerteller mit dem Druckregulierraum verbunden ist. Am anderen Ende ist die axiale Bohrung über radiale Öffnungen mit einem Raum verbunden, der von der Membran und einem Gehäusedeckel begrenzt wird, der Entlüftungsbohrungen zur Umgebung aufweist. Das Ende des Membranhalters mit den radialen Öffnungen ist von einem Schlauchstück umgeben, das die radialen Öffnungen bei vorgesehenen Arbeitsdrücken abdichtet. Im Fall von Überdruck in der Druckregulierkammer bildet sich zwischen dem Schlauchstück und dem Membranstößel ein Schlitz, durch den Gas aus der Druckregulierkammer durch die Entlüftungsbohrungen im Gehäusedeckel entweichen kann.

DE 763 658 C offenbart ein Druckminderventil mit einem innerhalb des normalen Arbeitsbereiches wirksamen Arbeitsventil und einem Sicherungsventil zur Vermeidung von Drücken oberhalb des normalen Arbeitsbereiches. Das Arbeitsventil befindet sich in der Bohrung eines Ventilkörpers, der über einen von einer verstärkten Wandung begrenzten Sicherungsraum mit einem Reglerkopf verbunden ist. Eine darin angeordnete Reglermembran trennt eine Niederdruckkammer, die einen Auslass hat, von einer geschlossenen Kammer mit einer Feder, die die Membran belastet. Die Membran ist formschlüssig mit einem Stößel verbunden, der sich durch die Niederdruckkammer und den Sicherungsraum zu dem Ventilkörper erstreckt, um im normalen Arbeitsbereich das Arbeitsventil zu betätigen. Ferner ist an dem Stößel ein Ventilteller ausgebildet, der zur Bereitstellung des Sicherungsventils in dem Sicherungsraum angeordnet ist, um bei Überschreiten des normalen Arbeitsbereiches den Gasdurchgang in die Niederdruckkammer abzusperren oder zu regeln. Zum Schutz der Membran vor Überlastung wird die Anordnung eines Überdruckventils am Reglerkopf vorgeschlagen.

Ferner sind z. B. aus US 2019/155316 A1, US 2012/111425 A1, EP 0 398 050 A2 oder WO 2022/148521 A1 Druckregler bekannt, deren Membran im Überdruckfall gegen den Druck der Membranfeder von einem Membranteller abheben kann, um den Überdruck durch eine Entlüftungsbohrung abzulassen. In EP 0 398 050 A2 wird außerdem eine konturierte Ausformung der Membran offenbart, wobei eine umlaufend ausgeformte Welle zur Auslenkung der Membran ohne Materialverformung dient und ein entlang ihres Umfangs ausgeformter O-Ringabschnitt zur luftdichten Klemmung zwischen den Gehäuseteilen.

Ausgehend von diesem Stand der Technik ist es Aufgabe der vorliegenden Erfindung, eine verbesserte Druckmembraneinheit mit vereinfachtem Aufbau bereitzustellen.

Diese Aufgabe wird durch eine Druckmembraneinheit mit den Merkmalen des Anspruchs 1 gelöst.

Bevorzugte Ausführungsformen der Druckmembraneinheit sind in den Unteransprüchen ausgeführt.

Gemäß einer ersten Ausführungsform weist eine erfindungsgemäße Druckmembraneinheit ein Ventilgehäuse und einen damit verbundenen Gehäusedeckel auf. Das Ventilgehäuse begrenzt eine Druckkammer und eine Ventilkammer, die durch eine Passage verbunden sind, die mittels eines in der Druckkammer angeordneten federbelasteten Ventilkopfs abdichtbar ist. Die Druckmembraneinheit weist dabei eine Membran auf, die die Ventilkammer begrenzt und von einer Entlüftungskammer trennt, die von der Membran und dem Gehäusedeckel begrenzt wird. Ferner weist die Druckmembraneinheit einen Membranstößel, der die Membran durchdringt und damit gekoppelt ist, und eine Membranfeder auf, die in der Entlüftungskammer angeordnet ist und die Membran gegen die Ventilkammer vorspannt. Eine Sicherheitseinrichtung der Druckmembraneinheit zur Begrenzung des Drucks in der Ventilkammer auf einen Arbeitsdruckbereich unterhalb eines bestimmten Grenzdrucks weist zumindest eine Entlüftungsbohrung in dem Gehäusedeckel auf. Erfindungsgemäß ist die Kopplung der Membran mit dem Membranstößel lösbar, wobei die lösbare Kopplung der Membran mit dem Membranstößel die Sicherheitseinrichtung zur Begrenzung des Drucks in der Ventilkammer bereitstellt. Dabei wird durch die Membranfeder der Grenzdruck bestimmt, bei dem die Membran von dem Membranstößel gelöst ist und eine fluidische Verbindung der Ventilkammer mit der Entlüftungskammer und der zumindest einen Entlüftungsbohrung bereitgestellt wird.

Ferner ist die Membran der erfindungsgemäßen Druckmembraneinheit mit einem umfänglichen Befestigungsring als ein Zweikomponenten-Spritzgussbauteil ausgebildet, wobei der Befestigungsring in dem Ventilgehäuse oder in dem Gehäusedeckel durch eine Schweißverbindung oder eine Klebverbindung befestigt ist oder zwischen dem Ventilgehäuse und dem Gehäusedeckel durch eine Klemmverbindung befestigt ist. Vorteilhaft hierbei ist, dass sich hierbei die Membran bei ihrer bestimmungsgemäßen Bewegung nicht verwerfen, d. h. undefiniert verformen kann, was bei einer direkten umlaufenden Klemmung der Membran auftreten kann und einen negativen Einfluss auf das Regelverhalten hat.

Damit stellt die erfindungsgemäße Druckmembraneinheit, die auch in einer Druckregelvorrichtung mit einer Druckgaskapsel eingesetzt werden kann, nicht nur eine Druckschalt- und Druckminderungsfunktion, sondern gleichzeitig mit der Sicherheitseinrichtung eine Druckbegrenzungsfunktion bereit. Die durch die von dem Membranstößel lösbare Membran bereitgestellte Sicherheitseinrichtung öffnet bei dem vorbestimmten Grenzdruck, der von der Stärke der Membranfeder abhängig ist. Folglich ist der vorbestimmte Grenzdruck, bei dem sich die Membran von dem Membranstößel löst, höher als ein für die Ventilkammer vorgesehener Soll- bzw. Regeldruck, der sich nach einem zu regelnden Arbeitsdruck in einem Raum außerhalb der Druckmembraneinheit richtet. Dazu weist die Ventilkammer entsprechend zumindest eine Auslassöffnung zur Verbindung mit dem externen Raum auf, während die Druckkammer der Druckmembraneinheit mit einem unter Druck stehenden Fluidreservoir, wie beispielsweise einer Druckgaskapsel, in Verbindung steht. Ferner ermöglicht die einfache Konstruktion der Druckmembraneinheit vorteilhaft eine kostengünstige Herstellung in Massenproduktion.

Gemäß einer weiteren Ausführungsform kann der Membranstößel der erfindungsgemäßen Druckmembraneinheit einen Membranbund aufweisen, der an einer von der Membranfeder abgewandten Seite der Membran angeordnet ist. Dabei ist die Membran nicht fest mit dem Membranstößel verbunden, sondern liegt lösbar auf dem Membranbund an dem Membranstößel an.

Im Falle eines Druckanstiegs in der Ventilkammer wird zunächst die Membran samt Membranstößel nach oben bis zu einem oberen Anschlag des Membranstößels am Gehäusedeckel gedrückt und hebt dann bei dem von der Membranfeder definierten Grenzdruck vom Membranbund am Membranstößel ab, sodass das Gas aus der Ventilkammer durch die Entlüftungskammer und die Entlüftungsbohrung in die Umgebung außerhalb des Gehäusedeckels entweichen kann.

Für den oberen Anschlag des Membranstößels an dem Gehäusedeckel und zur axialen Führung des Membranstößels kann nach einer weiteren Ausführungsform der erfindungsgemäßen Druckmembraneinheit vorgesehen sein, dass der Membranstößel einen sich durch die Entlüftungskammer erstreckenden ersten Stößelabschnitt und einen Anschlagsbund aufweist, der den ersten Stößelabschnitt auf einer von der Membran abgewandten Seite begrenzt. Der Gehäusedeckel weist dabei einen Hülsenabschnitt auf, der in die Entlüftungskammer hineinragt und eine Führungsöffnung begrenzt, in der der Anschlagsbund des Membranstößels axial geführt wird.

Befindet sich die Entlüftungsbohrung im Gehäusedeckel außerhalb des Hülsenabschnitts, stellt der geschlossene Wandungsabschnitt des Gehäusedeckels innerhalb des Hülsenabschnitts den axialen Anschlag für den Anschlagsbund des Membranstößels bereit.

Alternativ dazu kann die Entlüftungsbohrung (oder eine der Entlüftungsbohrungen) gemäß einer weiteren Ausführungsform der erfindungsgemäßen Druckmembraneinheit im Gehäusedeckel koaxial zu der Führungsöffnung ausgebildet sein. Dabei ist ein Durchmesser der Führungsöffnung im Hülsenabschnitt größer als ein Durchmesser der Entlüftungsbohrung, sodass in dem Hülsenabschnitt um die Entlüftungsbohrung ein Ringabsatz ausgebildet ist, der den axialen Anschlag für den in dem Hülsenabschnitt axial geführten Anschlagsbund des Membranstößels bereitstellt.

Eine Weiterbildung der erfindungsgemäßen Druckmembraneinheit sieht dabei vor, dass an dem Ringabsatz des Hülsenabschnitts und/oder an dem Anschlagsbund des Membranstößels zumindest eine Kanalstruktur ausgebildet ist, die eine Verbindung zwischen der Führungsöffnung und der Entlüftungsbohrung bei Anlage des Anschlagsbunds an dem Ringabsatz des Hülsenabschnitts bereitstellt.

Anderenends weist der Membranstößel nach einer weiteren Ausführungsform der erfindungsgemäßen Druckmembraneinheit einen zweiten Stößelabschnitt auf, der sich zur Betätigung des Ventilkopfs durch die Ventilkammer erstreckt.

Gemäß einer noch weiteren Ausführungsform der erfindungsgemäßen Druckmembraneinheit ist an dem zweiten Stößelabschnitt zur Betätigung des Ventilkopfs ein im Durchmesser von dem zweiten Stößelabschnitt abgesetzter Zapfenabschnitt ausgebildet. Der Durchmesser dieses Zapfenabschnitts ist dabei kleiner als ein Durchmesser der Passage, wobei der Zapfenabschnitt länger ist als die Passage, sodass der Zapfenabschnitt durch die Passage in die Druckkammer hineinragen kann, wenn sich der Membranstößel an einem unteren Anschlag befindet. Dazu stellt der zweite Stößelabschnitt angrenzend an den abgesetzten Zapfenabschnitt einen axialen Anschlag des Membranstößels an einer an die Passage angrenzenden Wandung der Ventilkammer bereit.

Dabei kann zum Gasdurchtritt gemäß einer Weiterbildung der erfindungsgemäßen Druckmembraneinheit an dem axialen Anschlag des zweiten Stößelabschnitts und/oder an der an die Passage angrenzenden Wandung zumindest eine Kanalstruktur ausgebildet sein, die eine Verbindung zwischen der Passage und der Ventilkammer bei Anlage des zweiten Stößelabschnitts mit dem axialen Anschlag an der Wandung bereitstellt.

Weitere Ausführungsformen der erfindungsgemäßen Druckmembraneinheit beziehen sich auf Material und Form des Ventilkopfs, der vorzugsweise aus Vollgummi bzw. einem elastomeren Material besteht, das insbesondere ein thermoplastisches Elastomer-Material ist, sodass auf zusätzliche Dichtungen verzichtet werden kann und die Montage erheblich vereinfacht wird. Ebenfalls für einen zuverlässigen Betrieb sorgt der zylindrisch geformte Ventilkopf, der einen größeren Durchmesser aufweist als die Passage und zur abdichtenden Anlage an einem an die Passage angrenzenden Wandungsabschnitt ausgebildet ist, der bevorzugt als Ringwall geformt ist.

Gemäß einer Weiterbildung der erfindungsgemäßen Druckmembraneinheit ist in der Druckkammer ein Ventilstift angeordnet, der den Ventilkopf aufweist und einstückig mit einem Ventilkörper verbunden ist, von dem sich ein im Durchmesser abgesetzter Zapfenabschnitt erstreckt. Der Durchmesser des Ventilkopfs und des Ventilkörpers sind dabei so mit dem Durchmesser der Druckkammer abgestimmt, dass ein Ringspalt für den Gasdurchtritt verbleibt. Der abgesetzte Zapfenabschnitt weist einen verdickten Zentrierabschnitt auf, dessen Durchmesser zwischen den Durchmessern des Ventilkörpers und des Zapfenabschnitts liegt. An dem Zentrierabschnitt liegt eine Ventilfeder an, die den Zapfenabschnitt umgibt. Der Ventilkörper stellt dabei angrenzend an den abgesetzten Zapfenabschnitt einen axialen Anschlag für die Ventilfeder bereit. Die Ventilfeder wirkt auf den Ventilkopf ein, sodass der Ventilkopf in Schließstellung gegen die Passage bzw. den die Passage umgebenden Ringwall gedrückt wird. Unter Einwirkung des Zapfenabschnitts am unteren Stößelabschnitt kann der Ventilkopf entgegen der Kraft der Ventilfeder in die Offenstellung überführt werden, in der der Ventilkopf von der Passage beabstandet ist.

Eine weitere Ausführungsform der erfindungsgemäßen Druckmembraneinheit sieht vor, dass ein Anschlussgehäuse abdichtend an einem die Druckkammer begrenzenden Steckabschnitt des Ventilgehäuses angeordnet ist und zumindest eine Durchtrittsöffnung aufweist, die mit der Druckkammer in fluidischer Verbindung steht. Über das Anschlussgehäuse kann die Druckmembraneinheit mit einem unter Druck stehenden Fluidreservoir, wie beispielsweise einer Druckgaskapsel, verbunden werden, sodass unter Druck stehendes Fluid, z. B. Gas, aus dem Fluidreservoir durch die Durchtrittsöffnung in die Drucckammer der Druckmembraneinheit gelangt, um druckgemindert durch die Ventilkammer und die Auslassöffnung dem Raum außerhalb der Druckmembraneinheit zugeführt zu werden.

Ferner kann das Anschlussgehäuse nach einer weiteren Ausführungsform der erfindungsgemäßen Druckmembraneinheit einen im Durchmesser abgesetzten Hülsenabschnitt aufweisen, der in der Druckkammer des Ventilgehäuses aufgenommen ist. In der Druckkammer stellt der Hülsenabschnitt eine Ringfläche als Anlage für eine Ventilfeder bereit, sodass sich die Ventilfeder an dem Hülsenabschnitt abstützt. Dabei drückt die Ventilfeder, die mit dem Ventilkopf in Wirkverbindung steht, in expandiertem Zustand den Ventilstift in die Schließstellung, und im komprimierten Zustand der Ventilfeder liegt der Ventilstift in der Offenstellung vor.

Weitere Ausführungsformen sowie einige der Vorteile, die mit diesen und weiteren Ausführungsformen verbunden sind, werden durch die nachfolgende ausführliche Beschreibung unter Bezug auf die begleitenden Figuren deutlich und besser verständlich. Gegenstände oder Teile derselben, die im Wesentlichen gleich oder ähnlich sind, können mit denselben Bezugszeichen versehen sein. Die Figuren sind lediglich eine schematische Darstellung einer Ausführungsform der Erfindung.

Dabei zeigen:
- **Fig. 1**: eine Längsschnittansicht einer erfindungsgemäßen Druckmembraneinheit in Schließstellung,
- **Fig. 2**: eine Längsschnittansicht der erfindungsgemäßen Druckmembraneinheit in Offenstellung,
- **Fig. 3**: eine Längsschnittansicht der erfindungsgemäßen Druckmembraneinheit in Entlüftungsstellung,
- **Fig. 4**: eine Längsschnittansicht der erfindungsgemäßen Druckmembraneinheit mit dem Membranstößel am oberen Anschlag,
- **Fig. 5**: eine Längsschnittansicht einer erfindungsgemäßen Druckmembraneinheit in Schließstellung mit alternativer Befestigung der Membran.

Die vorliegende Erfindung bezieht sich auf eine Druckmembraneinheit mit zuverlässiger Funktionsweise bezüglich Regelverhalten und Dichtigkeit. Außerdem erlaubt die einfache Konstruktion die kostengünstige Herstellung in Massenproduktion.

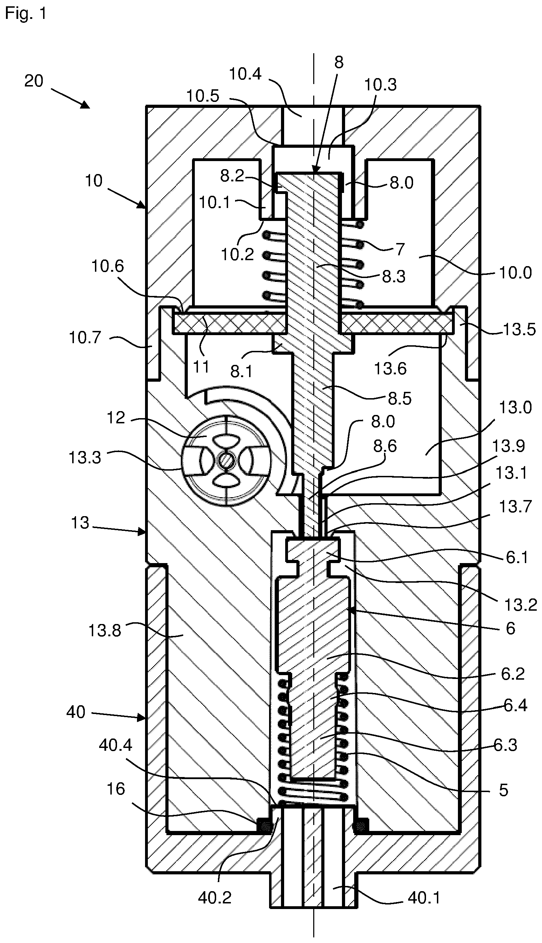

**Fig. 1 bis 5** zeigen ein Beispiel einer erfindungsgemäßen Druckmembraneinheit 20, die sich unter anderem zum Einsatz in einer Druckregelvorrichtung eignet, die zur Anordnung mit einer Druckgaskapsel in einem Getränkebehälter vorgesehen ist. Allerdings ist die erfindungsgemäße Druckmembraneinheit nicht darauf beschränkt, sondern sie kann auch in anderen Anwendungsgebieten eingesetzt werden, für die die Funktionen der erfindungsgemäßen Druckmembraneinheit als Druckschalt-, Druckminderungs- und Druckbegrenzungsventil geeignet sind.

Die Druckmembraneinheit 20 weist ein Ventilgehäuse 13 auf, das in axialer Richtung oben mit einem Gehäusedeckel 10 und unten mit einem Anschlussgehäuse 40 abdichtend verbunden ist. Dazu ist das Anschlussgehäuse 40 mit dem Ventilgehäuse 13 zusammengesteckt, das dazu einen Steckabschnitt 13.8 aufweist, und ohne weitere Dichtungen beispielsweise mittels Klebstoff oder Schweißen abgedichtet verbunden. Beim Laserschweißen oder Ultraschallschweißen ist es von Vorteil, wenn die zu fügenden Bauteile Anschlussgehäuse 40 und Ventilgehäuse 13 aus demselben Material bestehen. Zum Laserschweißen wird das Material des oberen bzw. äußeren Fügepartners (hier das Anschlussgehäuse 40) transparent/naturfarben bzw. laserstrahldurchlässig gewählt, und das Material des unteren bzw. inneren Fügepartners (hier das Ventilgehäuse 13) laserstrahlabsorbierend, z. B. schwarz. Ein geeignetes Material, insbesondere bei hohen Drücken (z. B. 60 bar) im Ventilgehäuse 13, ist z. B. Polyoxymethylen (POM), ein teilkristallines thermoplastisches Polymer. Es können aber auch andere thermoplastische Kunststoffe oder, je nach Anwendung, auch andere Materialien eingesetzt werden.

"Oben" und "unten" bezieht sich hierbei auf die Darstellung in den Figuren, die z. B. im Falle eines Einsatzes der Druckmembraneinheit 20 als Druckregelvorrichtung in einem zum Zapfen aufgestellten Getränkebehälter der Gebrauchsanordnung entsprechen kann.

Im Ventilgehäuse 13 befindet sich eine Ventilkammer 13.0, die eine Auslassöffnung 13.3 aufweist, um Gas aus der Ventilkammer 13.0 in einen Raum außerhalb der Druckregelungsvorrichtung 1, wie beispielsweise einem Getränkebehälter, abzugeben. Um zu verhindern, dass andere Fluide, z. B. Flüssigkeiten, aus dem externen Raum durch die Auslassöffnung 13.3 in die Ventilkammer 13.0 eindringen und zu Funktionsstörungen führen, ist in der Auslassöffnung 13.3 ein Einwege- bzw. Rückschlagventil 12 angeordnet, das nur die Strömung des Gases aus der Ventilkammer 13.0 in den externen Raum zulässt und in umgekehrter Richtung sperrt.

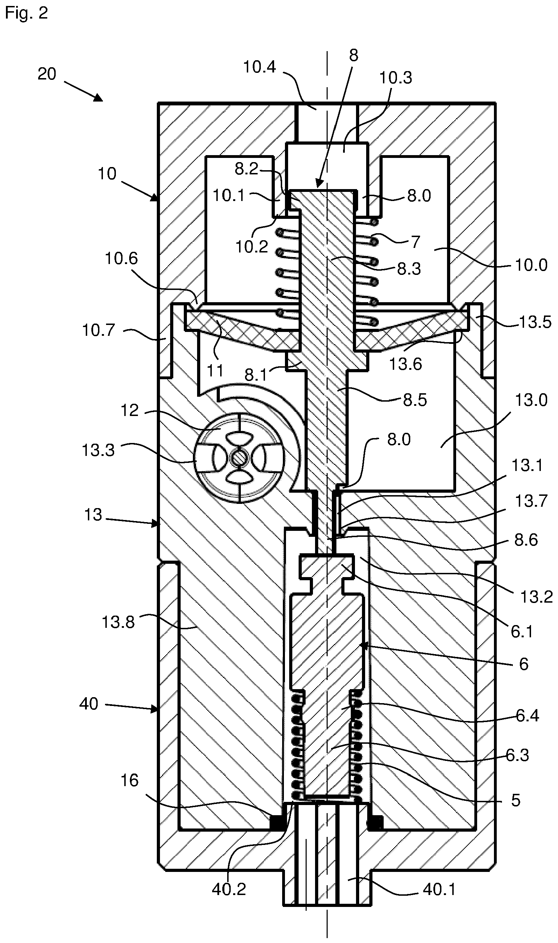

In dem Ventilgehäuse 13 ist ferner eine Druckkammer 13.2 ausgebildet, die in Axialrichtung über eine durchmesserreduzierte Passage 13.1 mit der Ventilkammer 13.0 verbunden ist. In der Druckkammer 13.2 ist ein axial beweglicher Ventilstift 6 mit einem Ventilkopf 6.1 zum Öffnen und Schließen der Passage 13.1 angeordnet. Von einer Ventilfeder 5 wird der Ventilkopf 6.1 gegen die Passage 13.1 gedrückt und in Schließstellung gehalten, wie in **Fig. 1** zu sehen ist. Zur Abstützung der Ventilfeder 5 weist das Anschlussgehäuse 40 einen Hülsenabschnitt 40.2 auf, der in die Druckkammer 13.2 hineinragt. Die in die Druckkammer 13.2 weisende Ringfläche 40.4 des Hülsenabschnitts 40.2 stellt dabei die Anlagefläche für die Ventilfeder 5 bereit. Um die Druckmembraneinheit 20 mit einem (nicht dargestellten) Reservoir mit einem unter Druck stehenden Fluid/Gas zu verbinden, weist das Anschlussgehäuse 40 Durchtrittsöffnungen 40.1 auf, die sich durch den Hülsenabschnitt 40.2 erstrecken und eine fluidische Verbindung zur Druckkammer 13.2 herstellen. Eine Dichtung 16 zwischen dem Ventilgehäuse 13 und dem Hülsenabschnitt 40.2 sorgt für eine Abdichtung der Druckkammer 13.2. Zur Überführung in eine Offenstellung, die in **Fig. 2** abgebildet ist, wobei der Ventilstift 6 entgegen der Rückstellkraft der Ventilfeder 5 von der Passage 13.1 beabstandet ist, wird der Ventilstift 6 von einem Membranstößel 8 betätigt, der die Längsachse der Druckmembraneinheit 20 definiert und sich axial beweglich durch die Ventilkammer 13.0 erstreckt.

Dabei ist der Membranstößel 8 mit einer elastisch verformbaren Membran 11 aus einem Elastomer, vorzugsweise einem thermoplastischen Elastomer, oder Silikon gekoppelt, die umfänglich zwischen dem Ventilgehäuse 13 und dem Gehäusedeckel 10 eingeklemmt ist, wobei vorteilhaft die Befestigung der Membran 11 in die Steckverbindung zwischen dem Ventilgehäuse 13 und dem Gehäusedeckel 10 integriert ist. Auf diese Weise sorgt die Membran 11 für eine Abdichtung zwischen dem Ventilgehäuse 13 und dem Gehäusedeckel 10 bzw. zwischen der Ventilkammer 13.0 und einer Entlüftungskammer 10.0, die der Gehäusedeckel 10 mit der Membran 11 definiert. Im dargestellten Beispiel weist das Ventilgehäuse 13 an seinem oberen Ende zur Verbindung mit dem Gehäusedeckel 10 einen im Durchmesser abgesetzten Steckabschnitt 13.5 auf, an dem innenumfänglich eine abgesetzte axiale Auflagefläche 13.6 als umfängliche Auflage für die Membran 11 ausgebildet ist. Der Gehäusedeckel 10 weist einen Umgriffabschnitt 10.7 auf, der komplementär zu dem abgesetzten Steckabschnitt 13.5 des Ventilgehäuses 13 ausformt ist, sodass der Steckabschnitt 13.5 und der Umgriffabschnitt 10.7 beim Zusammenstecken bündig aneinander anliegen. Um die Membran 11 einzuklemmen, weist der Gehäusedeckel 10 einen radial vom Umgriffabschnitt 10.7 beabstandeten Klemmringabsatz 10.6 auf, der im zusammengesteckten Zustand gegenüber der axialen Ringfläche 13.6 angeordnet ist. Der axiale Abstand zwischen dem Klemmringabsatz 10.6 des Gehäusedeckels 10 und der axialen Ringfläche 13.6 des Ventilgehäuses 13 ist in Abhängigkeit der Dicke der Membran 11 gewählt, sodass die Membran 11 zwischen dem Klemmringabsatz 10.6 und der axialen Ringfläche 13.6 im zusammengesteckten Zustand von Gehäusedeckel 10 und Ventilgehäuse 13 eingeklemmt ist. Selbstverständlich kann alternativ in einer Abwandlung dazu die abgesetzte axiale Auflagefläche am Gehäusedeckel vorliegen und ein Klemmringabsatz am Ventilgehäuse ausgebildet sein.

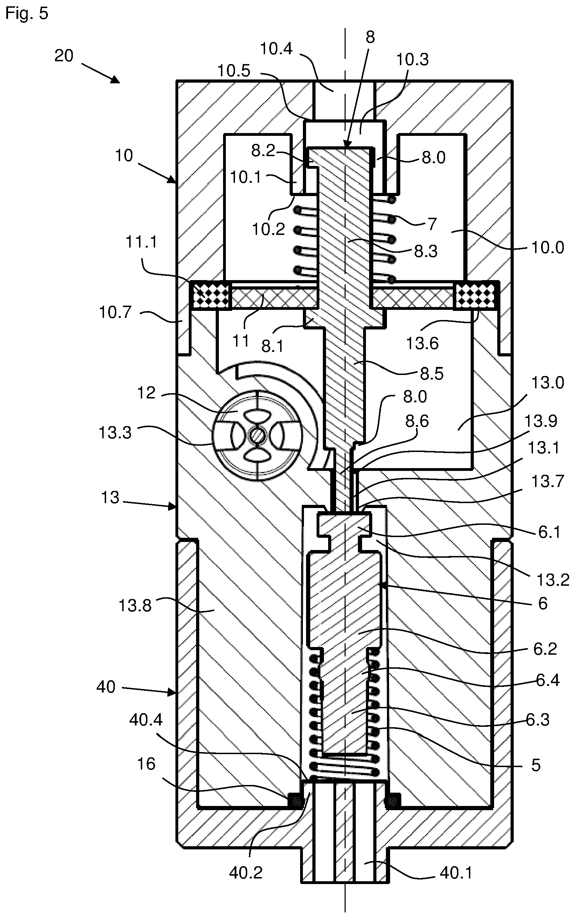

Alternativ zur direkten Klemmverbindung der Membran 11 zwischen dem Ventilgehäuse 13 und dem Gehäusedeckel 10 kann die Membran 11 als Zweikomponenten-Spritzgussbauteil ausgeführt sein, wobei die elastische Membran 11 in einen Befestigungsring 11.1 aus anderem Material eingespritzt ist. In **Fig. 5** ist die Membran 11 mit dem Befestigungsring 11.1 als 2-Komponentenbauteil ausgebildet und mittels des Befestigungsrings 11.1 in dem Ventilgehäuse 13 an der Verbindung mit dem Gehäusedeckel 10 eingeschweißt, eingeklebt oder eingeklemmt. Mit dem Befestigungsring 11.1 ist die Anordnung der Membran 11 jedoch nicht auf die Verbindungsstelle von Ventilgehäuse 13 und Gehäusedeckel 10 beschränkt. Durch Einschweißen oder Einkleben des Befestigungsrings 11.1 kann die Membran 11 auch weiter oben im Gehäusedeckel 10 oder weiter unten im Ventilgehäuse 13 angeordnet werden. Falls der Befestigungsring 11.1 mittels Schweißen, z. B. mit dem Gehäusedeckel 10 oder dem Ventilgehäuse 13 gefügt wird, kann wie bei der Befestigung des Anschlussgehäuses 40 Laserschweißen oder Ultraschallschweißen bevorzugt sein. Demzufolge ist es auch hier von Vorteil, wenn die zu fügenden Bauteile Befestigungsring 11.1 und Ventilgehäuse 13 (oder Gehäusedeckel 10) aus demselben Material bestehen. Daher kann als Material für den Befestigungsring 11.1 ebenfalls Polyoxymethylen (POM) eingesetzt werden.

Der Gehäusedeckel 10 weist eine Durchtrittsbohrung als Entlüftungsbohrung 10.4 auf, die die Entlüftungskammer 10.0 mit der Umgebung außerhalb des Gehäusedeckels 10 - und außerhalb des externen Raums, in den die Auslassöffnung 13.3 mündet - verbindet.

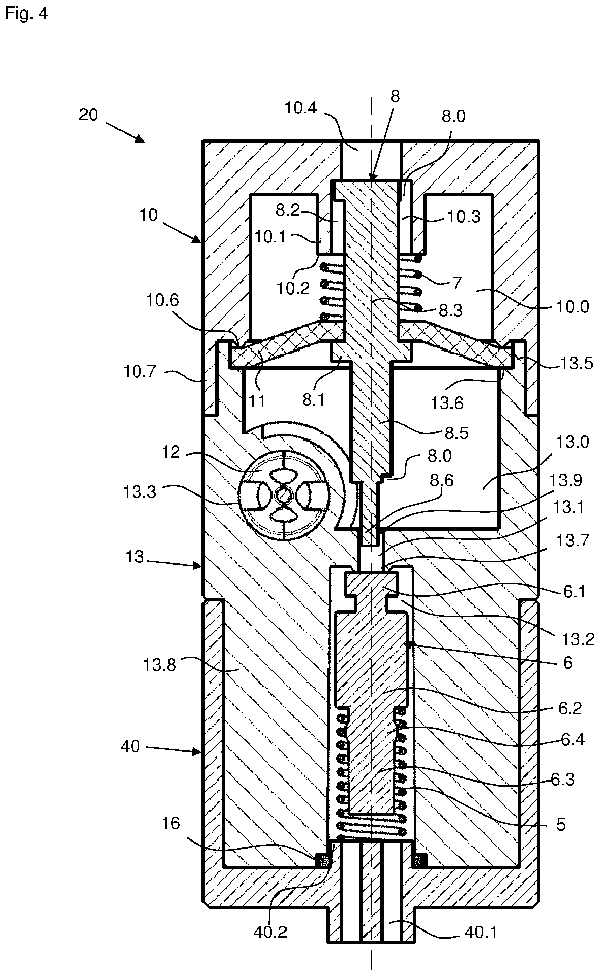

In der Entlüftungskammer 10.0 ist eine Membranfeder 7 um einen ersten Stößelabschnitt 8.3 des Membranstößels 8 angeordnet. Die Membranfeder 7 stützt sich einenends an der Membran 11 und anderenends an der Ringfläche 10.2 eines Hülsenabschnitts 10.1 ab, der koaxial zu dem Membranstößel 8 in die Entlüftungskammer 10.0 hineinragend am Gehäusedeckel 10 ausgebildet ist. Der Hülsenabschnitt 10.1 des Gehäusedeckels 10 dient außerdem zur axialen Führung und als oberer Anschlag für den Membranstößel 8, der dazu einen Anschlagsbund 8.2 aufweist, der den ersten Stößelabschnitt 8.3 nach oben begrenzt. Dabei ist die von dem Hülsenabschnitt 10.1 begrenzte Führungsöffnung 10.3 koaxial mit der Entlüftungsbohrung 10.4 verbunden, deren Durchmesser kleiner ist als der der Führungsöffnung 10.3. Am oberen Anschlag, dargestellt in **Fig. 4****,** schlägt der Anschlagsbund 8.2 an dem um die Entlüftungsbohrung 10.4 gebildeten Ringabsatz 10.5 des Gehäusedeckels 10 an. Dabei liegt die Membranfeder 7 komprimiert und vorgespannt vor.

In einer Abwandlung des dargestellten Beispiels kann die Entlüftungsbohrung bzw. können mehrere Entlüftungsbohrungen im Gehäusedeckel außerhalb des Hülsenabschnitts ausgebildet sein, der dann eine geschlossene Anschlagsfläche für den Anschlagsbund des Membranstößels bereitstellt. Die Varianten, in denen im Gehäusedeckel eine zur Führungsöffnung koaxiale Durchtrittsbohrung vorgesehen ist, ermöglichen eine Modifikation des Membranstößels, der dann mit einem zusätzlichen Abschnitt oberhalb des Anschlagsbunds durch die Durchtrittsbohrung aus dem Gehäusedeckel herausragen kann. Damit kann der Membranstößel an dem zusätzlichen Abschnitt am oberen Anschlag lösbar fixiert werden, um die Schließstellung z. B. in einem Auslieferungszustand der Vorrichtung zu sichern. Diese Durchtrittsbohrung kann dann wie im dargestellten Beispiel als Entlüftungsbohrung 10.4 fungieren, wofür im Anschlagsbund 8.2 des Membranstößels 8 eine Kanalstruktur 8.0 ausgebildet ist, um eine fluidische Verbindung zwischen der Führungsöffnung 10.3 und der Entlüftungsbohrung 10.4 bereitzustellen, wenn der Membranstößel 8 am oberen Anschlag ist. Alternativ dazu kann die Durchtrittsbohrung auch nur zum Durchtritt des Membranstößelabschnitts vorgesehen und die zumindest eine Entlüftungsbohrung im Gehäusedeckel an anderer Stelle ausgebildet sein.

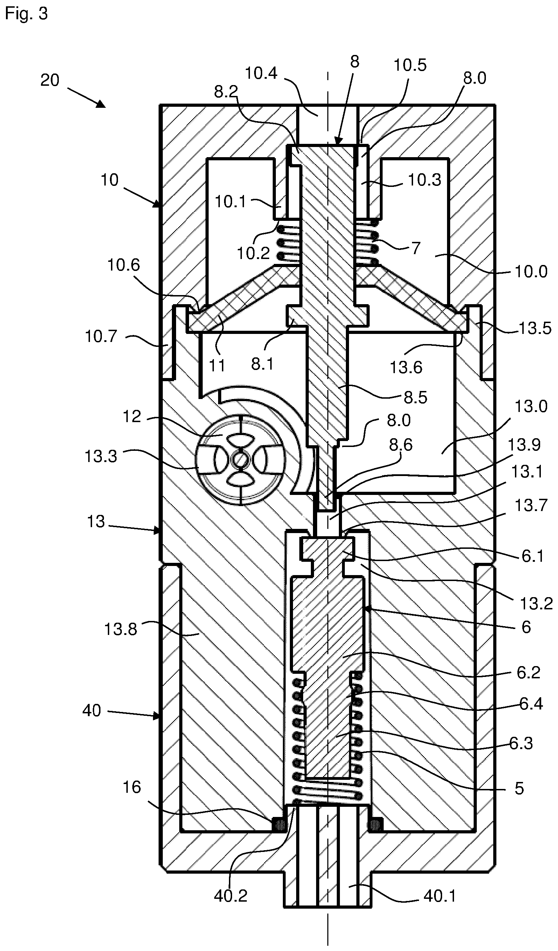

Zur Kopplung mit der Membran 11 weist der Membranstößel 8 einen Membranbund 8.1 auf, der an einer von der Membranfeder 7 abgewandten Seite der Membran 11, also in der Ventilkammer 13.0 vorliegt. Der Innendurchmesser der Membranfeder 7 entspricht dabei in etwa dem Durchmesser des Membranbunds 8.1 oder ist etwas größer. Damit sich die Membran 11 von dem Membranstößel 8 lösen kann, um als druckbegrenzende Sicherheitseinrichtung zu fungieren, wenn der Druck in der Ventilkammer 13.0 einen vorbestimmten Grenzdruck erreicht bzw. überschreitet, liegt die Membran 11 auf dem Membranbund 8.1 nur auf und am Umfang des mittleren Stößelabschnitt 8.3 nur an. Durch die Federkraft der Membranfeder 7 kann der vorbestimmte Grenzdruck in der Ventilkammer 13.0 definiert werden, bei dem sich die Membran 11 von dem Membranstößel 8 löst. Bei ansteigendem Druck in der Ventilkammer 13.0, z. B. infolge von Undichtigkeiten am Ventil 6, wird die Membran 11 samt Membranstößel 8 nach oben gedrückt, bis der Membranstößel 8 seinen oberen Anschlag erreicht **(****Fig. 4****).** Bei weiterem Druckanstieg hebt dann die Membran 11 vom Membranbund 8.1 ab, wenn der vorbestimmte Grenzdruck erreicht ist, wie in **Fig. 3** dargestellt ist, sodass Gas aus der Ventilkammer 13.0 über die Entlüftungskammer 10.0 durch die Entlüftungsbohrung 10.4 in die Umgebung außerhalb des Gehäusedeckels 10 und außerhalb des externen Raums, in den die Auslassöffnung 13.3 mündet, entweichen kann. Dabei sorgt die Kanalstruktur 8.0 an dem Anschlagsbund 8.2 des Membranstößels 8 für den Gasdurchtritt von der Führungsöffnung 10.3 in die Entlüftungsbohrung 10.4 bei Anlage des Anschlagsbunds 8.2 an dem Ringabsatz 10.5 des Hülsenabschnitts 10.1.

In den in **Fig. 1** **und** **2** dargestellten Arbeitszuständen der Druckregelvorrichtung mit Schließ- und Offenstellung des Ventilkopfs 6.1 liegt der Druck in der Ventilkammer 13.0 in einem vorbestimmten Arbeitsbereich, in dem die Membran 11 dicht an dem Membranstößel 8 anliegt und die Ventilkammer 13.0 von der Entlüftungskammer 10.0 trennt. Ist der Druck in der Ventilkammer 13.0 kleiner als ein voreingestellter, definierter Soll-Druck der Druckmembraneinheit 20, wird die Membran 11 von der Membranfeder 7 in die Ventilkammer 13.0 gedrückt, und der mit der Membran 11 gekoppelte Membranstößel 8 wird nach unten bewegt, um den Ventilkopf 6.1 in die Offenstellung **(****Fig. 2****)** zu überführen, sodass Gas aus dem Druckraum 13.2 über die Ventilkammer 13.0 durch die Auslassöffnung 13.3 nachgefördert wird. Wird in der Ventilkammer 13.0 der voreingestellte, definierte Soll-Druck der Druckmembraneinheit 20 erreicht, bewegt sich der Membranstößel 8 mit der Membran 11 nach oben, sodass der Ventilkopf 6.1 von der Ventilfeder 5 gegen die Passage 13.1 gedrückt wird und die Schließstellung **(****Fig. 1****)** einnimmt. Erst bei erneuter Unterschreitung des Solldruckes öffnet die Druckmembraneinheit 20 wieder, um Gas nachzufördern.

Um den in der Druckkammer 13.2 angeordneten Ventilkopf 6.1 zu betätigen, weist der Membranstößel 8 einen sich durch die Ventilkammer 13.0 erstreckenden zweiten Stößelabschnitt 8.5 und einen davon im Durchmesser abgesetzten Zapfenabschnitt 8.6 am unteren Ende auf. Auch wenn sich der Membranstößel 8 am oberen Anschlag befindet, ragt der Zapfenabschnitt 8.6 **(****Fig. 4****)** in die Passage 13.1, um die Führung des Membranstößels 8 zu unterstützen. Der Durchmesser des Zapfenabschnitts 8.6 ist daher kleiner als der der Passage 13.1, sodass zwischen der Wand der Passage 13.1 und dem Zapfenabschnitt 8.6 ein Ringspalt für den Gasdurchtritt bei geöffnetem Ventil verbleibt. Im Arbeitszustand kann sich der Zapfenabschnitt 8.6 in der Passage 13.1 zwischen der Schließstellung **(****Fig. 1****),** in der der Zapfenabschnitt 8.6 an dem Ventilkopf 6.1 anliegt, ohne diesen von der Passage 13.1 zu entfernen, und der Offenstellung **(****Fig. 2****)** bewegen, in der der Zapfenabschnitt 8.6 in die Druckkammer 13.2 hineinragt und den Ventilkopf 6.1 von der Passage 13.1 beabstandet. Dazu ist die Länge des Zapfenabschnitts 8.6 größer als die Länge der Passage 13.1 ausgebildet. So kommt in der Offenstellung **(****Fig. 2****)** der zweite Stößelabschnitt 8.5 des Membranstößels 8 an seinem Absatz zum Zapfenabschnitt 8.6 an der Wandung 13.9 der Ventilkammer 13.0 zur Anlage, die die Passage 13.1 umgibt. Um hierbei den Gasdurchtritt aus der Passage 13.1 in die Ventilkammer 13.0 zu gestatten, ist in dem Absatz des zweiten Stößelabschnitts 8.5 eine entsprechende Kanalstruktur 8.0 ausgebildet. Im Falle eines modifizierten Membranstößels, der zur Sicherung der Schließstellung am oberen Anschlag fixiert ist, wird zur Überführung der Druckmembraneinheit in einen Arbeitszustand die Fixierung des Membranstößels gelöst, sodass sich der Membranstößel unter Einwirkung der Membranfeder mit der Membran nach unten in Richtung der Ventilkammer bewegt, in der ein Druck innerhalb des Arbeitsdruckbereichs liegt.

Für eine verbesserte Dichtigkeit der Druckmembraneinheit 20 sorgt nicht nur die Verwendung der Membran 11, sondern auch der Einsatz eines den Ventilkopf 6.1 aufweisenden Ventilstifts 6, der eine robuste Form aufweist und aus einer Vollgummimischung, vorzugsweise aus einem thermoplastischen Elastomer, besteht. Der zylindrische Ventilkopf 6.1 ist über einen Halsabschnitt mit einem zylindrischen Ventilkörper 6.2 verbunden, von dem sich ein im Durchmesser abgesetzter Zapfenabschnitt 6.3 erstreckt. Die Ventilfeder 5 umgibt diesen Zapfenabschnitt 6.3 und liegt an dem Absatz zum Ventilkörper 6.2 an, um den Ventilstift 6 in die Schließstellung gegen die Ventilpassage 13.1 zu drücken. Der Zapfenabschnitt 6.3 weist zudem einen kugelig verdickten Zentrierabschnitt 6.4 auf, an dem die Ventilfeder 5 anliegt. Der Durchmesser des Zentrierabschnitts 6.4 entspricht somit dem Innendurchmesser der Ventilfeder 5 und liegt zwischen dem Durchmesser des Zapfenabschnitts 6.3 und dem des Ventilkörpers 6.2.

Der Durchmesser des Ventilkörpers 6.2 und der Durchmesser der Druckkammer 13.2 sind so aufeinander abgestimmt, dass ein Ringspalt zwischen der Wand der Druckkammer 13.2 und dem Ventilkörper 6.2 für den Gasdurchtritt besteht. Für einen sicheren Dichtsitz an der Passage 13.1 ist der Durchmesser des Ventilkopfs 6.1 zwar kleiner als der des Ventilkörpers 6.2, aber deutlich größer als der Durchmesser der Passage 13.1, im dargestellten Beispiel ungefähr doppelt so groß. Außerdem ist der in der Druckkammer 13.2 an die Passage 13.1 angrenzende Wandungsabschnitt als Ringwall 13.7 ausgebildet. Diese Ventilkonstruktion sorgt nicht nur für eine zuverlässige Dichtwirkung, sodass weitere Dichtringe nicht erforderlich sind, sondern erleichtert überdies die Montage erheblich.

Die einfache Konstruktion gestattet die Herstellung der erfindungsgemäßen Druckmembraneinheit in Massenproduktion, da die Montage der einzelnen Komponenten hauptsächlich durch Zusammenstecken erfolgt und mit einer geringen Anzahl an Dichtungen auskommt. Dabei sorgt die Membran-Membranstößel-Anordnung für ein verbessertes Regelverhalten und Entlüftungsverhalten zur Vermeidung von Überdruck. Der Einsatz der Membran und des Ventilstifts sowie die abgedichteten Steckverbindungen sorgen trotz reduzierter Anzahl von Dichtringen für eine verbesserte Dichtigkeit. Außerdem kann durch den Einsatz der Membran mit Druckregel- und Überdruckfunktion auf ein zusätzliches Überdruck- bzw. Sicherheitsventil für die Druckregelvorrichtung verzichtet werden.

### BEZUGSZEICHENLISTE

- 5: Ventilfeder
- 6: Ventilstift
- 6.1: Ventilkopf
- 6.2: Ventilkörper
- 6.3: Zapfenabschnitt
- 6.4: Zentrierabschnitt
- 7: Membranfeder
- 8: Membranstößel
- 8.0: Kanalstruktur
- 8.1: Membranbund
- 8.2: Anschlagsbund
- 8.3: erster Stößelabschnitt
- 8.5: zweiter Stößelabschnitt
- 8.6: Zapfenabschnitt
- 10: Gehäusedeckel
- 10.0: Entlüftungskammer
- 10.1: Hülsenabschnitt
- 10.2: Ringfläche
- 10.3: Führungsöffnung
- 10.4: Durchtritts-/Entlüftungsbohrung
- 10.5: Ringabsatz
- 10.6: Klemmringabsatz
- 10.7: Umgriffabschnitt
- 11: Membran
- 11.1: Befestigungsring
- 12: Rückschlagventil
- 13: Ventilgehäuse
- 13.0: Ventilkammer
- 13.1: Passage
- 13.2: Druckkammer
- 13.3: Auslassöffnung
- 13.5: Steckabschnitt
- 13.6: Ringfläche
- 13.7: Ringwall
- 13.8: Steckabschnitt
- 13.9: Wandung
- 40: Anschlussgehäuse
- 40.1: Durchtrittsöffnung
- 40.2: Hülsenabschnitt
- 40.4: Ringfläche
- 16: Dichtung
- 20: Druckmembraneinheit

## Patentansprüche

1. Druckmembraneinheit (20) mit
- einem Ventilgehäuse (13), das eine Druckkammer (13.2) und eine Ventilkammer (13.0) aufweist, die durch eine Passage (13.1) verbunden sind, die mittels eines in der Druckkammer (13.2) angeordneten federbelasteten Ventilkopfs (6.1) abdichtbar ist, wobei die Ventilkammer (13.0) zumindest eine Auslassöffnung (13.3) aufweist, die zur Verbindung mit einem externen Raum ausgebildet ist, und die Druckkammer (13.2) dazu ausgebildet ist, mit einem unter Druck stehenden Fluidreservoir verbunden zu werden,
- einem Gehäusedeckel (10), der mit dem Ventilgehäuse (13) verbunden ist und zumindest eine Entlüftungsbohrung (10.4) aufweist,
- einer Membran (11), die die Ventilkammer (13.0) begrenzt und von einer Entlüftungskammer (10.0) trennt, die von der Membran (11) und dem Gehäusedeckel (10) begrenzt wird,
- einem Membranstößel (8), der die Membran (11) durchdringt und damit gekoppelt ist, und
- einer Membranfeder (7), die in der Entlüftungskammer (10.0) angeordnet ist und die Membran (11) gegen die Ventilkammer (13.0) vorspannt, und
- einer Sicherheitseinrichtung, die zur Begrenzung eines Drucks in der Ventilkammer (13.0) auf einen Arbeitsdruckbereich unterhalb eines vorbestimmten Grenzdrucks ausgebildet ist,
wobei die Kopplung der Membran (11) mit dem Membranstößel (8) lösbar ist, wobei die lösbare Kopplung der Membran (11) mit dem Membranstößel (8) die Sicherheitseinrichtung zur Begrenzung des Drucks in der Ventilkammer (13.0) bereitstellt, wobei durch die Membranfeder (7) der Grenzdruck bestimmt wird, bei dem die Membran (11) von dem Membranstößel (8) gelöst ist, und
wobei durch die von dem Membranstößel (8) gelöste Membran (11) eine fluidische Verbindung der Ventilkammer (13.0) mit der Entlüftungskammer (10.0) und der zumindest einen Entlüftungsbohrung (10.4) bereitgestellt wird,
wobei die Membran (11) mit einem umfänglichen Befestigungsring (11.1) als ein 2-Komponenten-Spritzgussbauteil ausgebildet ist, bei dem die Membran (11) in den Befestigungsring (11.1) eingespritzt ist, wobei der Befestigungsring (11.1) in dem Ventilgehäuse (13) oder in dem Gehäusedeckel (10) durch eine Schweißverbindung oder eine Klebverbindung befestigt ist oder zwischen dem Ventilgehäuse (13) und dem Gehäusedeckel (10) durch eine Klemmverbindung befestigt ist.

2. Druckmembraneinheit (20) nach Anspruch 1,
**dadurch gekennzeichnet, dass**
der Membranstößel (8) einen Membranbund (8.1) aufweist, der an einer von der Membranfeder (7) abgewandten Seite der Membran (11) angeordnet ist, wobei die Membran (11) auf dem Membranbund (8.1) an dem Membranstößel (8) lösbar anliegt.

3. Druckmembraneinheit (20) nach Anspruch 1 oder 2,
**dadurch gekennzeichnet, dass**
der Membranstößel (8)
- einen ersten Stößelabschnitt (8.3), der sich durch die Entlüftungskammer (10.0) erstreckt, und
- einen Anschlagsbund (8.2) aufweist, der den ersten Stößelabschnitt (8.3) auf einer von der Membran (11) abgewandten Seite begrenzt,
wobei der Gehäusedeckel (10) einen Hülsenabschnitt (10.1) aufweist, der in die Entlüftungskammer (10.0) hineinragt und eine Führungsöffnung (10.3) begrenzt, in der der Anschlagsbund (8.2) axial geführt wird.

4. Druckmembraneinheit (20) nach Anspruch 3,
**dadurch gekennzeichnet, dass**
die Entlüftungsbohrung (10.4) im Gehäusedeckel (10) koaxial zu der Führungsöffnung (10.3) ausgebildet ist, wobei ein Durchmesser der Führungsöffnung (10.3) größer ist als ein Durchmesser der Entlüftungsbohrung (10.4), sodass in dem Hülsenabschnitt (10.1) ein Ringabsatz (10.5) um die Entlüftungsbohrung (10.4) ausgebildet ist, der einen axialen Anschlag für den in dem der Hülsenabschnitt (10.1) axial geführten Anschlagsbund (8.2) des Membranstößels (8) bereitstellt.

5. Druckmembraneinheit (20) nach Anspruch 4,
**dadurch gekennzeichnet, dass**
an dem Ringabsatz (10.5) des Hülsenabschnitts (10.1) und/oder an dem Anschlagsbund (8.2) des Membranstößels (8) zumindest eine Kanalstruktur (8.0) ausgebildet ist, die eine Verbindung zwischen der Führungsöffnung (10.3) und der Entlüftungsbohrung (10.4) bei Anlage des Anschlagsbunds (8.2) an dem Ringabsatz (10.5) des Hülsenabschnitts (10.1) bereitstellt.

6. Druckmembraneinheit (20) nach zumindest einem der Ansprüche 1 bis 5,
**dadurch gekennzeichnet, dass**
der Membranstößel (8) einen zweiten Stößelabschnitt (8.5) aufweist, der sich durch die Ventilkammer (13.0) zur Betätigung des Ventilkopfs (6.1) erstreckt.

7. Druckmembraneinheit (20) nach Anspruch 6,
**dadurch gekennzeichnet, dass**
an dem zweiten Stößelabschnitt (8.5) zur Betätigung des Ventilkopfs (6.1) ein im Durchmesser von dem zweiten Stößelabschnitt (8.5) abgesetzter Zapfenabschnitt (8.6) ausgebildet ist, dessen Durchmesser kleiner ist als ein Durchmesser der Passage (13.1), wobei der Zapfenabschnitt (8.6) länger ist als die Passage (13.1), und wobei der zweite Stößelabschnitt (8.5) angrenzend an den abgesetzten Zapfenabschnitt (8.6) einen axialen Anschlag des Membranstößels (8) an einer an die Passage (13.1) angrenzenden Wandung (13.9) der Ventilkammer (13.0) bereitstellt.

8. Druckmembraneinheit (20) nach Anspruch 7,
**dadurch gekennzeichnet, dass**
an dem axialen Anschlag des zweiten Stößelabschnitts (8.5) und/oder an der an die Passage (13.1) angrenzenden Wandung (13.9) zumindest eine Kanalstruktur (8.0) ausgebildet ist, die eine Verbindung zwischen der Passage (13.1) und der Ventilkammer (13.0) bei Anlage des zweiten Stößelabschnitts (8.5) mit dem axialen Anschlag an der Wandung (13) bereitstellt.

9. Druckmembraneinheit (20) nach zumindest einem der Ansprüche 1 bis 8,
**dadurch gekennzeichnet, dass**
zur Klemmverbindung der Membran (11) das Ventilgehäuse (13) und der Gehäusedeckel (10) als einander zugewandte Klemmflächen eine abgesetzte Membranauflagefläche (13.6) und einen Klemmringabsatz (10.6) aufweisen.

10. Druckmembraneinheit (20) nach zumindest einem der Ansprüche 1 bis 9,
**dadurch gekennzeichnet, dass**
der Ventilkopf (6.1) aus einem elastomeren Material besteht, das bevorzugt ein thermoplastisches Elastomer-Material ist.

11. Druckmembraneinheit (20) nach zumindest einem der Ansprüche 1 bis 10,
**dadurch gekennzeichnet, dass**
der Ventilkopf (6.1) einen größeren Durchmesser aufweist als die Passage (13.1) und zur abdichtenden Anlage an einem in der Druckkammer (13.2) an die Passage (13) angrenzenden Wandungsabschnitt (13.7) ausgebildet ist, der bevorzugt als Ringwall (13.7) geformt ist.

12. Druckmembraneinheit (20) nach zumindest einem der Ansprüche 1 bis 11,
**dadurch gekennzeichnet, dass**
in der Druckkammer (13.2) ein Ventilstift (6) angeordnet ist, der den Ventilkopf (6.1) aufweist und einstückig mit einem Ventilkörper (6.2) verbunden ist, von dem sich ein im Durchmesser abgesetzter Zapfenabschnitt (6.3) erstreckt, der einen Zentrierabschnitt (6.4) aufweist, dessen Durchmesser zwischen den Durchmessern des Ventilkörpers (6.2) und des Zapfenabschnitts (6.3) liegt, wobei der Ventilkörper (6.2) angrenzend an dem abgesetzten Zapfenabschnitt (6.3) einen axialen Anschlag für eine Ventilfeder (5) bereitstellt, die den Zapfenabschnitt (6.3) umgibt und an dem Zentrierabschnitt (6.4) anliegt.

13. Druckmembraneinheit (20) nach zumindest einem der Ansprüche 1 bis 12,
**dadurch gekennzeichnet, dass**
die Druckmembraneinheit (20) ein Anschlussgehäuse (40) aufweist, das abdichtend an einem die Druckkammer (13.2) begrenzenden Steckabschnitt (13.8) des Ventilgehäuses (13) angeordnet ist und zumindest eine Durchtrittsöffnung (40.1) aufweist, die mit der Druckkammer (13.2) in fluidischer Verbindung steht.

14. Druckmembraneinheit (20) nach Anspruch 13,
**dadurch gekennzeichnet, dass**
das Anschlussgehäuse (40) einen im Durchmesser abgesetzten Hülsenabschnitt (40.2) aufweist, der in der Druckkammer (13.2) aufgenommen ist und an dem sich eine Ventilfeder (5) abstützt, die mit dem Ventilkopf (6.1) in Wirkverbindung steht, der in expandiertem Zustand der Ventilfeder (5) in der Schließstellung und in komprimiertem Zustand der Ventilfeder (5) in der Offenstellung vorliegt

## Claims

1. A pressure diaphragm unit (20) with
- a valve housing (13), which has a pressure chamber (13.2) and a valve chamber (13.0), which are connected by a passage (13.1), which can be sealed by means of a spring-loaded valve head (6.1) arranged in the pressure chamber (13.2), wherein the valve chamber (13.0) has at least one outlet opening (13.3), which is formed for connection to an external space, and the pressure chamber (13.2) is formed for being connected to a pressurized fluid reservoir,
- a housing cover (10), which is connected to the valve housing (13) and has at least one ventilation bore (10.4),
- a diaphragm (11), which delimits the valve chamber (13.0) and separates the latter from a ventilation chamber (10.0), which is delimited by the diaphragm (11) and the housing cover (10),
- a diaphragm plunger (8), which passes through the diaphragm (11) and which is coupled thereto, and
- a diaphragm spring (7), which is arranged in the ventilation chamber (10.0) and pretensions the diaphragm (11) against the valve chamber (13.0) and
- a safety device, which is formed for delimiting a pressure in the valve chamber (13.0) to an operating pressure range below a certain threshold pressure,
wherein the coupling of the diaphragm (11) to the diaphragm plunger (8) is releasable, wherein the releasable coupling of the diaphragm (11) to the diaphragm plunger (8) provides the safety device for limiting the pressure in the valve chamber (13.0), wherein the diaphragm spring (7) determines the threshold pressure, at which the diaphragm (11) is released from the diaphragm plunger (8), and
wherein a fluidic connection of the valve chamber (13.0) to the ventilation chamber (10.0) and the at least one ventilation bore (10.4) is provided by the diaphragm (11), which is released from the diaphragm plunger (8),
wherein the diaphragm (11) with a circumferential fastening ring (11.1) is formed as a 2-component injection-molded part, in the case of which the diaphragm (11) is injected into the fastening ring (11.1), wherein the fastening ring (11.1) is fastened in the valve housing (13) or in the housing cover (10) by means of a welded connection or an adhesive connection or is fastened between the valve housing (13) and the housing cover (10) by means of a clamping connection.

2. The pressure diaphragm unit (20) according to claim 1,
**characterized in that**
the diaphragm plunger (8) has a diaphragm collar (8.1), which is arranged on a side of the diaphragm (11) facing away from the diaphragm spring (7), wherein the diaphragm (11) rests releasably on the diaphragm collar (8.1) against the diaphragm plunger (8).

3. The pressure diaphragm unit (20) according to claim 1 or 2,
**characterized in that**
the diaphragm plunger (8)
- has a first plunger section (8.3), which extends through the ventilation chamber (10.0), and
- a stop collar (8.2), which delimits the first plunger section (8.3) on a side facing away from the diaphragm (11),
wherein the housing cover (10) has a sleeve section (10.1), which protrudes into the ventilation chamber (10.0) and delimits a guide opening (10.3), in which the stop collar (8.2) is axially guided.

4. The pressure diaphragm unit (20) according to claim 3,
**characterized in that**
the ventilation bore (10.4) is formed coaxially to the guide opening (10.3) in the housing cover (10), wherein a diameter of the guide opening (10.3) is larger than a diameter of the ventilation bore (10.4), so that an annular ledge (10.5) is formed in the sleeve section (10.1) around the ventilation bore (10.4), which annular ledge provides an axial stop for the stop collar (8.2) of the diaphragm plunger (8), which is axially guided in the sleeve section (10.1).

5. The pressure diaphragm unit (20) according to claim 4,
**characterized in that**
at least one channel structure (8.0) is formed on the annular ledge (10.5) of the sleeve section (10.1) and/or on the stop collar (8.2) of the diaphragm plunger (8), which channel structure provides a connection between the guide opening (10.3) and the ventilation bore (10.4) when the stop collar (8.2) rests against the annular ledge (10.5) of the sleeve section (10.1).

6. The pressure diaphragm unit (20) according to at least any one of claims 1 to 5, **characterized in that**
the diaphragm plunger (8) has a second plunger section (8.5), which extends through the valve chamber (13.0) for actuating the valve head (6.1).

7. The pressure diaphragm unit (20) according to claim 6,
**characterized in that**
a journal section (8.6), which is offset in diameter from the second plunger section (8.5), is formed on the second plunger section (8.5) for actuating the valve head (6.1), the diameter of said journal section being smaller than a diameter of the passage (13.1), wherein the journal section (8.6) is longer than the passage (13.1), and wherein adjoining the offset journal section (8.6), the second plunger section (8.5) provides an axial stop of the diaphragm plunger (8) on a wall (13.9) of the valve chamber (13.0) adjoining the passage (13.1).

8. The pressure diaphragm unit (20) according to claim 7,
**characterized in that**
at least one channel structure (8.0) is formed on the axial stop of the second plunger section (8.5) and/or on the wall (13.9) adjoining the passage (13.1), which channel structure provides a connection between the passage (13.1) and the valve chamber (13.0) when the second plunger section (8.5) rests with the axial stop against the wall (13).

9. The pressure diaphragm unit (20) according to at least any one of claims 1 to 8, **characterized in that**
the valve housing (13) and the housing cover (10) as clamping surfaces facing one another have an offset diaphragm bearing surface (13.6) and a clamping ring ledge (10.6) for the clamping connection of the diaphragm (11).

10. The pressure diaphragm unit (20) according to at least any one of claims 1 to 9, **characterized in that**
the valve head (6.1) consists of an elastomeric material, which is preferably a thermoplastic elastomeric material.

11. The pressure diaphragm unit (20) according to at least any one of claims 1 to 10, **characterized in that**
the valve head (6.1) has a larger diameter than the passage (13.1) and is formed for sealingly resting against a wall section (13.7), which adjoins the passage (13) in the pressure chamber (13.2) and which is preferably formed as ring wall (13.7).

12. The pressure diaphragm unit (20) according to at least any one of claims 1 to 11, **characterized in that**
a valve pin (6) is arranged in the pressure chamber (13.2), which has the valve head (6.1) and which is connected in one piece to a valve body (6.2), from which a journal section (6.3) extends, which is offset in diameter and which has a centering section (6.4), the diameter of which lies between the diameters of the valve body (6.2) and of the journal section (6.3), wherein, adjoining the offset journal section (6.3), the valve body (6.2) provides an axial stop for a valve spring (5), which surrounds the journal section (6.3) and rests against the centering section (6.4).

13. The pressure diaphragm unit (20) according to at least any one of claims 1 to 12, **characterized in that**
the pressure diaphragm unit (20) has a connection housing (40), which is sealingly arranged on a plug section (13.8) of the valve housing (13), which delimits the pressure chamber (13.2), and has at least one passage opening (40.1), which is in fluidic contact with the pressure chamber (13.2).

14. The pressure diaphragm unit (20) according to claim 13,
**characterized in that**
the connection housing (40) has a sleeve section (40.2), which is offset in diameter and which is received in the pressure chamber (13.2) and on which a valve spring (5) supports itself, which is in operative connection with the valve head (6.1), which, in the expanded state of the valve spring (5), is present in the closed position and, in the compressed state of the valve spring (5), is present in the open position.

## Revendications

1. Unité à membrane sous pression (20) comprenant
- un boîtier de soupape (13) qui présente une chambre de pression (13.2) et une chambre de soupape (13.0), lesquelles sont reliées par un passage (13.1) pouvant être fermé au moyen d'une tête de soupape à ressort (6.1) disposée dans la chambre de pression (13.2), la chambre de soupape (13.0) comportant au moins un orifice de sortie (13.3) conçu pour être relié à un espace extérieur, et la chambre de pression (13.2) étant conçue pour être reliée à un réservoir de fluide sous pression,
- un couvercle de boîtier (10) qui est relié au boîtier de soupape (13) et qui présente au moins un orifice de purge (10.4),
- une membrane (11) qui délimite la chambre de soupape (13.0) et la sépare d'une chambre de purge (10.0) délimitée par la membrane (11) et le couvercle de boîtier (10),
- un poussoir à membrane (8) qui traverse la membrane (11) et qui est couplé à celle-ci, et
- un ressort à membrane (7) qui est disposé dans la chambre de purge (10.0) et qui précontraint la membrane (11) contre la chambre de soupape (13.0), et
- un dispositif de sécurité conçu pour limiter la pression dans la chambre de soupape (13.0) à une plage de pression de service inférieure à une pression limite prédéterminée,
le couplage de la membrane (11) avec le poussoir à membrane (8) étant amovible, le couplage amovible de la membrane (11) avec le poussoir à membrane (8) fournissant le dispositif de sécurité pour limiter la pression dans la chambre de soupape (13.0),
le ressort à membrane (7) déterminant la pression limite à laquelle la membrane (11) est libérée du poussoir à membrane (8), et
la membrane (11) libérée par le poussoir à membrane (8) assurant une liaison fluidique entre la chambre de soupape (13.0) avec la chambre de purge (10.0) et le ou les orifices de purge (10.4),
la membrane (11) étant réalisée avec une bague de fixation périphérique (11.1) sous la forme d'un composant moulé par injection à deux composants, dans lequel la membrane (11) est injectée dans la bague de fixation (11.1), la bague de fixation (11.1) étant fixée dans le boîtier de soupape (13) ou dans le couvercle de boîtier (10) par une liaison soudée ou collée, ou étant fixée entre le boîtier de soupape (13) et le couvercle de boîtier (10) par une liaison par serrage.

2. Unité à membrane sous pression (20) selon la revendication 1,
**caractérisée en ce que**
le poussoir à membrane (8) comporte un collet de membrane (8.1) qui est disposé sur un côté de la membrane (11) opposé au ressort de membrane (7), la membrane (11) reposant de manière amovible sur le collet de membrane (8.1) au niveau du poussoir à membrane (8).

3. Unité à membrane sous pression (20) selon la revendication 1 ou 2,
**caractérisée en ce que**
le poussoir à membrane (8) présente
- une première partie de poussoir (8.3) qui s'étend à travers la chambre de purge (10.0), et
- un collet de butée (8.2) qui délimite la première partie de poussoir (8.3) sur un côté opposé à la membrane (11),
le couvercle de boîtier (10) présentant une partie manchon (10.1) qui fait saillie dans la chambre de purge (10.0) et délimite un orifice de guidage (10.3) dans lequel le collet de butée (8.2) est guidé axialement.

4. Unité à membrane sous pression (20) selon la revendication 3,
**caractérisée en ce que**
l'orifice de purge (10.4) dans le couvercle du boîtier (10) est formé coaxialement à l'orifice de guidage (10.3), le diamètre de l'orifice de guidage (10.3) étant supérieur au diamètre de l'orifice de purge (10.4), de sorte qu'un épaulement annulaire (10.5) est formé dans la partie manchon (10.1) autour de l'orifice de purge (10.4), lequel fournit une butée axiale pour le collet de butée (8.2) du poussoir à membrane (8), guidé axialement dans la partie manchon (10.1).

5. Unité à membrane sous pression (20) selon la revendication 4,
**caractérisée en ce que**
au niveau de l'épaulement annulaire (10.5) de la partie manchon (10.1) et/ou au niveau du collet de butée (8.2) du poussoir à membrane (8) est formée au moins une structure de canal (8.0) qui assure une liaison entre l'orifice de guidage (10.3) et l'orifice de purge (10.4) lorsque le collet de butée (8.2) est en appui contre l'épaulement annulaire (10.5) de la partie manchon (10.1).

6. Unité à membrane sous pression (20) selon au moins l'une des revendications 1 à 5, **caractérisée en ce que**
le poussoir à membrane (8) comporte une deuxième partie de poussoir (8.5) qui s'étend à travers la chambre de soupape (13.0) pour actionner la tête de soupape (6.1).

7. Unité à membrane sous pression (20) selon la revendication 6,
**caractérisée en ce que**
sur la deuxième partie du poussoir (8.5) destinée à actionner la tête de soupape (6.1) est formée une partie tenon (8.6) avec un diamètre décalé par rapport à la deuxième partie du poussoir (8.5), dont le diamètre est inférieur au diamètre du passage (13.1), la partie tenon (8.6) étant plus longue que le passage (13.1), et la deuxième partie du poussoir (8.5) fournissant, à proximité de la partie tenon (8.6) décalée, une butée axiale du poussoir à membrane (8) sur une paroi (13.9) de la chambre de soupape (13.0), adjacente au passage (13.1).

8. Unité à membrane sous pression (20) selon la revendication 7,
**caractérisée en ce que**
au moins une structure de canal (8.0) est formée sur la butée axiale de la deuxième partie du poussoir (8.5) et/ou sur la paroi (13.9) adjacente au passage (13.1), laquelle établit une liaison entre le passage (13.1) et la chambre de soupape (13.0) lorsque la deuxième partie du poussoir (8.5) est en appui avec la butée axiale sur la paroi (13).

9. Unité à membrane sous pression (20) selon au moins l'une des revendications 1 à 8, **caractérisée en ce que**
pour la liaison par serrage de la membrane (11), le boîtier de soupape (13) et le couvercle du boîtier (10) présentent, en tant que surfaces de serrage tournées l'une vers l'autre, une surface d'appui de membrane décalée (13.6) et un épaulement d'anneau de serrage (10.6).

10. Unité à membrane sous pression (20) selon au moins l'une des revendications 1 à 9, **caractérisée en ce que**
la tête de soupape (6.1) est constituée d'un matériau élastomère, de préférence un matériau élastomère thermoplastique.

11. Unité à membrane sous pression (20) selon au moins l'une des revendications 1 à 10,
**caractérisée en ce que**
la tête de soupape (6.1) présente un diamètre supérieur à celui du passage (13.1) et est conçue pour s'appuyer de manière étanche contre une partie de paroi (13.7) adjacente au passage (13) dans la chambre de pression (13.2), laquelle est de préférence formée comme un mur annulaire (13.7).

12. Unité à membrane sous pression (20) selon au moins l'une des revendications 1 à 11,
**caractérisée en ce que**
dans la chambre de pression (13.2) est disposée une tige de soupape (6) qui comporte la tête de soupape (6.1) et est reliée d'un seul tenant à un corps de soupape (6.2) à partir duquel s'étend une partie tenon (6.3) de diamètre décalé, qui comporte une partie de centrage (6.4) dont le diamètre se situe entre les diamètres du corps de soupape (6.2) et de la partie tenon (6.3), le corps de soupape (6.2) fournissant, à proximité de la partie tenon (6.3) décalée, une butée axiale pour un ressort de soupape (5) qui entoure la partie tenon (6.3) et s'appuie contre la partie de centrage (6.4).

13. Unité à membrane sous pression (20) selon au moins l'une des revendications 1 à 12,
**caractérisée en ce que**
l'unité à membrane sous pression (20) comporte un boîtier de raccordement (40) qui est disposé de manière étanche sur une section enfichable (13.8) du boîtier de soupape (13), délimitant la chambre de pression (13.2), et qui comporte au moins un orifice de passage (40.1) qui est en liaison fluidique avec la chambre de pression (13.2).

14. Unité à membrane sous pression (20) selon la revendication 13,
**caractérisée en ce que**
le boîtier de raccordement (40) présente une partie manchon (40.2) de diamètre décalé, qui est logée dans la chambre de pression (13.2) et sur laquelle s'appuie un ressort de soupape (5) qui est en liaison active avec la tête de soupape (6.1) qui se trouve en position de fermeture lorsque le ressort de soupape (5) est détendu et en position d'ouverture lorsque le ressort de soupape (5) est comprimé.
